# EUROPEAN PATENT SPECIFICATION

(11) **EP 2 778 730 B1**
(45) Date of publication and mention of the grant of the patent: **24.04.2024**
(21) Application number: 14159065.3
(22) Date of filing: 12.03.2014
(51) Int. Cl.: G02B 6/42

(54) **OPTICAL SUBASSEMBLY AND METHOD OF MANUFACTURING THE SAME**
OPTISCHE UNTERBAUGRUPPE UND VERFAHREN ZU SEINER HERSTELLUNG
SOUS-ENSEMBLE OPTIQUE ET SON PROCÉDÉ DE FABRICATION

(30) Priority: 15.03.2013 US 201313844246
(43) Date of publication of application: 17.09.2014
(73) Proprietor: Baker Hughes Holdings LLC, Houston, TX 77073 (US)
(72) Inventor: Kasten, Ansas Matthias, Niskayuna, NY New York 12309 (US); Kim, Sora, Niskayuna, NY New York 12309 (US); Esler, David Richard, Niskayuna, NY New York 12309 (US); Grecco, James Edward, Skaneateles, NY New York 13152-5314 (US)
(74) Representative: Novagraaf Group

(56) References cited:
- EP-A1- 0 777 140
- EP-A1- 1 722 258
- WO-A1-2010/143175
- JP-A- H02 127 606

## Description

Optoelectronic devices include optical and electronic components that may be used in different types of optical systems having varied applications. For example, optoelectronic devices can be used in video inspection instruments, which allow maneuvering through a remote and/or reduced access area of a component to provide a visible image of a small area of the component that is located a distance from the user.

WO 2010/143175 A1 discloses a fibre ferrule with a moulded lens in an opening giving optical access to an optical element. EP077740 and JPH02127606 describe sub-assemblies where a ferrule sleeve holder is attached to a mounting substrate surface and surrounds a spacer element and an emitter.

In optical communication links, conventional optoelectronic subassemblies typically use an optical focusing medium to direct emitted light from a light source to a photodetector over an optical waveguide. This optical waveguide may be several meters long depending on the application. These optoelectronic subassemblies also include packaging to operate over a defined temperature range (e.g., 0 to +70°C). However, in some applications, the optoelectronic subassemblies may have to operate at much higher or lower temperatures, in which case, the source or detector is provided with cooling and/or heating components. As more components are added to these optoelectronic subassemblies, the size and power requirements increase, which can lead to packaging issues, for example, when used in some devices, such as a video inspection instrument distal head, which is small in size.

Different configurations are known for providing cooling and miniaturization of the optoelectronic subassemblies and packaging thereof. However, the different cooling arrangements result in optoelectronic subassemblies that do not fit within the distal head of the video inspection instrument. Additionally, the miniaturization techniques can result in optoelectronic subassemblies that are not able to operate at higher temperature ranges. Moreover, many of the miniaturization approaches, such as ones that use focusing lenses, use small guide pins for alignment that are mechanically unstable in the optoelectronic subassembly miniaturized size, particularly for use in a video inspection instrument application. Moreover, conventional optoelectronic subassemblies also use custom parts which can make manufacturing expensive and also complex.

The present invention is defined in the accompanying claims.
Figure 1 is schematic illustration of a video inspection instrument.
Figure 2 is a diagram of an optical subassembly in accordance with one embodiment.
Figure 3 is a schematic cross-sectional view of an optical subassembly is accordance with another embodiment.
Figure 4 is a schematic cross-sectional view of an optical subassembly is accordance with another embodiment.
Figure 5 is a schematic cross-sectional view of an optical subassembly not according to the invention.
Figure 6 is a side view of an optical subassembly not according to the invention.
Figure 7 is a top view of the optical subassembly of Figure 6.
Figure 8 is a diagram of a ferrule sleeve.
Figure 9 is a diagram of another ferrule sleeve.
Figure 10 is a diagram of optical subassembly not according to the invention.
Figure 11 is a diagram of bottom of the optical subassembly of Figure 10.
Figure 12 is a flowchart of a method for assembly an optical subassembly in accordance with various embodiments.

The following detailed description of certain embodiments will be better understood when read in conjunction with the appended drawings. As used herein, an element or step recited in the singular and proceeded with the word "a" or "an" should be understood as not excluding plural of said elements or steps, unless such exclusion is explicitly stated. Furthermore, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional elements not having that property.

Although the various embodiments may be described herein for a particular operating environment, for example in connection with a particular video inspection instrument or application, it should be appreciated that one or more embodiments are equally applicable to other devices and applications.

Various embodiments provide an optoelectronic or optical subassembly (or optoelectronic or optical assembly) and methods of manufacturing the same that allow for the connection of a light emitter to an optical waveguide, such as within a distal head of a video inspection instrument (e.g., video borescope). An optical subassembly in various embodiments includes reinforcement blocks and spacers that provide increased mechanical strength and facilitate the assembly process, respectively, as described in more detail herein. By practicing various embodiments, improved performance such as enhanced optical coupling efficiency, reduced optical noise, better temperature performance, and improved reliability may be provided, while maintaining a small form factor subassembly that allows for easy assembly at a low cost.

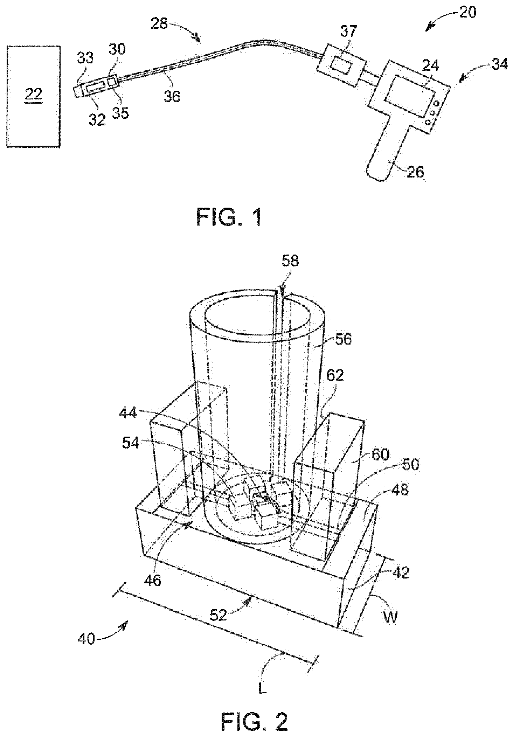

More particularly, various embodiments provide an optical subassembly (which is an optoelectronic subassembly) that allows for the compact integration of an optical emitter with a waveguide. For example, various embodiments may be implemented in connection with a video inspection instrument 20 as shown in Figure 1. The video inspection instrument 20 operates to acquire images of an area of a surface 22 located a distance from the user viewing a display screen 24 that displays the acquired images. In the illustrated embodiment, the video inspection instrument 20 is handheld by the handle 26.

The video inspection instrument 20 includes an insertion tube 28 (or tubular insertion portion, capable of being positioned within various cavities) that may be manipulated or maneuvered (e.g., into tight or confined spaces) to place a tip or distal head 30 of the insertion tube 28 adjacent the surface 22, which may be in contact with or spaced apart from the surface 22. The distal head 30 includes therein an optical or optoelectronic subassembly 32 as described in more detail herein that is configured to optically transmit data signals of the acquired images of the surface 22. The distal head 30 also includes a control unit 35 in various embodiments that includes, for example, circuitry to control an imaging unit 33, signal generation, etc.

Images are acquired by the imaging unit 33 such as a CMOS or CCD camera at a tip of the distal head 30. The distal head also includes circuitry (not shown) to control elements such as the imaging unit 33 or the optical transmitter in the optoelectronic subassembly 32. A proximal end 34 generally includes a control section (having buttons or other controls) for remote movement of the distal head 30 and to control the acquisition of the images, which in various embodiments are video images. It should be noted that different types of articulation or movement mechanisms may be used to provide movement of the distal head 30.

The insertion tube 28 generally includes electrical wires and optical illumination fibers (both not shown) or other structure that align within the distal end, such as one or more optical fibers 36 (e.g., an optical fiber bundle) for communicating or transmitting images from the distal head 30 (as acquired by the imaging unit 33 and optically transmitted by the optoelectronic subassembly 32 that converts electrical signals to optical signals in various embodiments) to the proximal end 34. The optical fibers 36 also may be used in some embodiments for illumination. The proximal end 34 also includes, for example, a photodetector 37 that coverts light signals back to electrical signals. Additionally, other control elements, such as articulation cables and wires (both not shown) also extend within the insertion tube 28. It should be noted that the dimensions of the video inspection instrument 20, for example, the insertion tube 28 may be varied based on, for example, the particular application.

Figure 2 illustrates an optoelectronic or optical subassembly 40 (that may be embodied as the optoelectronic subassembly 32 shown in Figure 1) in accordance with one embodiment. The optical subassembly 40 includes a base 42, illustrated as a carrier substrate. The base 42 is generally rectangular in shape and formed from a ceramic material in some embodiments. However, the base may be sized and shaped differently, as well as formed from a different material or combination or materials. In one embodiment, the base 42 has a length (L) of about 3.2 millimeters (mm) and a width (W) of about 1.6 mm. However, other sizes and shapes of the base 42 may be provided, such as by dicing a substrate material with a ceramic saw to form a base 42 having particular dimensions or to modify the dimensions of the base 42. The base 42 in various embodiments is a base substrate formed from a carrier material as described herein.

It should be noted that the outer diameter of a ferrule sleeve as described herein in various embodiments is dictated by industry standard (e.g., LC sleeve). In various embodiments, the width of the base 42 is selected to match this outer diameter. The length of the sleeve in various embodiments is made as short as possible (e.g., to meet the small form factor), but long enough to provide enough mechanical stability for the optical fiber and ferrule stick as described herein. For example, in some embodiments, sleeve lengths ranging from about 2mm to about 3mm are used.

An optical emitter 44, which in one embodiment is a vertical-cavity surface-emitting laser (VCSEL) die, is attached to a top surface 46 of the base 42. Other optical emitting devices may be used, for example, any type of semiconductor laser diode or light emitting diode (LED). The optical emitter 44 may be attached to the base 42 using different means, which in one embodiment includes using an epoxy or other adhesive to securely and fixedly attach the optical emitter 44 to the base 42. In addition to mechanical attachment, electrical contact is made between the optical emitter 44 and the base 42 when conductive epoxy is used. In the illustrated embodiment, the optical emitter 44 is attached or mounted generally to a middle of the top surface 46 of the base 42. However, positioning of the optical emitter 44 on the base 42 may be changed or offset from the middle as desired or needed. As used herein in various embodiments, attached can mean attached, coupled, mounted and/or connected in different ways or configurations.

The base 42 also includes electrical connections thereon. In particular, metal contacts 48 are provided along opposite side edges of the base 42, which in some embodiments are configured as contact pads. The metal contacts 48 are electrically connected to the optical emitter 44 via metal traces 50, which may be metal runners or other electrical connections. The optical emitter 44 can be electrically connected to the metal traces 50 by various means such as electrically conductive adhesives (e.g. conductive epoxy), wire bonds, or solder bumps. The metal contacts 48 and metal traces 50 may be deposited (e.g. metal deposition by thermal evaporation or sputtering) on the top surface 46 of the base 42 in some embodiments. The metal traces 50 extend from the metal contacts 48 to electrical contacts (not shown) of the optical emitter 44, which may be provided on bottom side of the optical emitter 44. For example, in some embodiments, the optical emitter 44 is mounted to a top of the metal traces 50. Thus, the metal traces 50 provide an electrical current path from the optical emitter 44 to the metal contacts 48.

It should be noted that different electrical connections to the optical emitter 44 may be provided. For example, is some embodiments, vias (not shown) may be provided that extend as openings through the base 42 from the top side 46 to a bottom side 52, on which are provided electrical pads, solder bumps, of other electrical connections to provide an electrical path to the optical emitter 44. In still other embodiments or additionally, the optical emitter 44 may include electrical contacts on a top surface thereof, which may, for example, be bump bonded or soldered to a gold wire that is also bump bonded to the top surface 46 of the base 42. Accordingly, in this embodiment, a wire bond connection is provided to the optical emitter 44. It should be appreciated that different connection arrangements to the optical emitter 44 may be provided as desired or needed, for example, based on a particular application or configuration.

The optical subassembly 40 also includes a plurality of spacers 54 (illustrated as four spacers 54) attached to the base 42 and surrounding or adjacent to the optical emitter 44. The spacers 54 may be attached to the base 42 using an epoxy or adhesive. In the illustrated embodiment, the optical emitter 44 is generally square in shape with one spacer 54 mounted adjacent each of the sides of the optical emitter 44. The spacers 54 are illustrated as generally square in shape, but may have different shapes and dimensions, for example, based on the configuration or shape of the optical emitter 44. The spacers 54 in some embodiments are mounted such that the spacers 54 are not in contact with the metal traces 50. For example, in the illustrated embodiment, the optical emitter 44 is rotated relative to the base 42 such that sides of the optical emitter 44 are rotated ninety degrees relative to sides of the base 42. The spacers 54 are aligned at each of the sides of the optical emitter 44, such as adjacent to, but not in contact with or abutting the optical emitter 44. The spacing between the spacers 54 and the optical emitter 44 may be varied and in some embodiments the spacers 54 abut and contact the sides of the spacers 54.

Thus, the spacers 54 are positioned generally around the outer periphery of the optical emitter 44. It should be noted that additional or fewer spacers 54 may be provided as desired or needed. For example, larger or smaller spacers 54 may be provided and shaped differently, such as "L" shaped to extend along two sides of the optical emitter 44. As another example, the spacers 54 may be two half-rings.

In various embodiments, the spacers 54 are positioned such that spacers 54 substantially encompass the outer periphery of the optical emitter 44. The spacers 54 have a height that is greater than the height of the optical emitter 44. For example, the tops of the spacers 54 extend higher than a top of the optical emitter 44 such that a plane in which the tops of spacers 54 are located is above a plane in which the top of the optical emitter 44 is located. Thus, for example, when a component (e.g., an optical fiber) is positioned to be optically coupled to the optical emitter 44, the spacers 54 act as a stop or block to prevent the component from physically contacting the top surface of the optical emitter 44. Accordingly, a spacing or gap is provided between the top surface of the optical emitter 44 and the bottom surface of the component that is positioned adjacent the optical emitter 44. In various embodiments, the spacers 54 are formed from the same material as the base 42. For example, in one embodiment, the spacers 54 and base 42 are both formed from a ceramic material. In one embodiment, the ceramic material is an oxide ceramic. It should be noted that spacer elements, such as the spacers 54 or other features (e.g. means of providing a mechanical stop to protect the optical emitter 44) can be part of the base structure, for example, the base 42, or part of a sleeve structure as described herein.

The optical subassembly 40 also includes a ferrule sleeve 56 attached to the base 42, which may be attached using an epoxy or adhesive. In various embodiments, epoxy is used as being simpler, cheaper, and allows for a smaller form factor, as well as does not create excess heat during manufacturing compared to laser welding, such as laser spot welding. However, in various embodiments, the attachment using epoxy is weaker, so reinforcement elements are used as described herein.

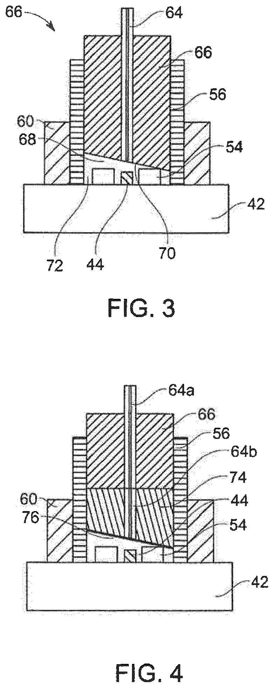

The ferrule sleeve 56 is sized and shaped to surround the optical emitter 44 and the spacers 54, as well as to receive therein a component, such as the optical fiber 64 (shown in Figure 3). For example, the ferrule sleeve 56 in the illustrated embodiment has a generally circular cross-section to receive therein an optical fiber for positioning adjacent to the optical emitter 44 for optical coupling thereto. As can be seen, the ferrule sleeve 56 is generally cylindrical in shape and extends a distance above the top surface 46 of the base 42 such that when a component is received therein, support of the component relative to the optical emitter 44 is provided. The length and inner diameter of the ferrule sleeve 56 may be based on the type of component or optical fiber to be received therein. The optical fiber is typically contained in a ferrule stick as describe herein with an outer diameter that matches the inner diameter of the ferrule sleeve 56. Additionally, the diameter of the ferrule sleeve 56 is selected such that the spacers 54 and optical emitter 44 are encompassed within the ferrule sleeve 56.

In one embodiment, where an optical fiber is inserted and received within the ferrule sleeve 56, the optical fiber is maintained in alignment with the optical emitter 44 by the ferrule sleeve 56. For example, the ferrule sleeve 56 is positioned such that when the optical fiber is inserted within the ferrule sleeve 56, the optical fiber is aligned with an aperture of the optical emitter 44 to provide optical coupling between the optical emitter 44 and optical waveguide (e.g. optical fiber). It should be noted that the ferrule sleeve 56 may be sized to accommodate the optical fiber, as well as a surrounding support, such as a ferrule stick with an angled polished contact (APC) facet at an end of the optical fiber that is inserted within the ferrule sleeve 56. The ferrule sleeve 56 may be formed from different materials. In one embodiment, the ferrule sleeve 56 is formed from the same material as the base 42 and spacers 54, for example, a ceramic material as described herein. However, different materials may be used, such as aluminum oxide or zirconium dioxide. In various embodiments, the ferrule sleeve 56 is non-conductive, for example, formed from a non-conductive material (such as a non-metal material).

The ferrule sleeve 56 may include an opening along a portion of a length thereof, which is illustrated as a longitudinal slit 58 (or slot) extending along the entire or partial length of the ferrule sleeve 56. The slit 58 in various embodiments is configured to provide some flexibility to the ferrule sleeve 56, as well as to allow the removal of materials from within the ferrule sleeve 56, such as gel and epoxy that may be used to secure the optical fiber within the ferrule sleeve 56. The width of the slit 58 may be varied as desired or needed. In some embodiments a solid ferrule sleeve 56 may be provided and if the slit 56 is desired or needed, the slit 56 may be cut into the ferrule sleeve 56, such as by using a dicing saw.

The optical subassembly 40 also includes reinforcement members 60, illustrated as reinforcement blocks that are positioned adjacent the ferrule sleeve 56. In the illustrated embodiment, two reinforcement members 60 are illustrated and attached to the top surface 46 of the base 42, such as by using an epoxy or adhesive as described herein. The reinforcement members 60 are illustrated as being positioned on opposite sides of the ferrule sleeve 56 and extend along the width W of the base 42 a distance such that at least one side of the reinforcement members 60 is in contact and abutting an outer surface of the ferrule sleeve 56. It should be noted that although the reinforcement members 60 are illustrated as blocks having planar sides, the surface of a side, particularly the side 62 that is in abutting engagement with the ferrule sleeve 56, may be curved complementary to the curvature of the outer circumference of the ferrule sleeve 56 to provide additional contact surface therewith. Additionally, the reinforcement members 60 may be sized such that the side 62 extends along all of or substantially the entire width of the top surface 46 of the base 42 or along only a portion thereof. The reinforcement members 60 provide support to the ferrule sleeve 56 in various embodiments, which may include rigidity in lateral and/or torsional loads.

The reinforcement members 60 are sized in the illustrated embodiment to extend from the outer surface of the ferrule sleeve 56 to an edge of the metal contacts 48. However, it should be noted that the reinforcement members 60 in some embodiments may not extend entirely to the edge of the metal contacts 48. In embodiments where the metal contacts 48 are not provided, such as when the electrical contact are made on the bottom surface 52 of the base 42 using through-vias, the reinforcement members 60 may extend along an additional length of the top surface 46 of the base 42, such as up to the edge of the base 42. It should be noted that the cross-section of the reinforcement members 60 may have different shapes other than the illustrated rectangular cross-sectional shape. For example, the reinforcement members 60 may have a triangular cross-sectional shape with one of the sides of the triangular cross-section abutting the outer surface of the ferrule sleeve 56.

The reinforcement members 60 are also sized to extend a distance along the length of the outer surface of the ferrule sleeve 56 (upward as viewed in Figure 2). For example, in the illustrated embodiment, the reinforcement members 60 extend about half way along the length of the ferrule sleeve 56. In other embodiments, the reinforcement members 60 may extend along more or less of the length of the outer surface of the ferrule sleeve 56. For example, in some embodiments, the reinforcement members 60 may extend along at least a portion of the length of the ferrule sleeve 56. Thus, the reinforcement members 60 are configured to provide mechanical support to the ferrule sleeve 56 along at least portions of lengths of the ferrule sleeve 56.

It should be noted that the reinforcement members 60 are attached to the top surface 46 of the base 42 on top of the metal traces 54. In some embodiments, the reinforcement members 60 may include a slot (not shown) on a bottom surface of the reinforcement members 60 that accommodates the metal traces 50 passing thereunder. For example, the slot may be sized to receive therethrough the metal trace 50. The slot in the ferrule sleeve 56 (or other means of venting holes) allows coupling fluids (e.g. index matching gels or epoxies) to escape when the ferrule stick (containing the optical fiber) is inserted into the sleeve structure forming the ferrule sleeve 56.

In various embodiments, the reinforcement members 60 are formed from the same material as the base 42, spacers 54, and ferrule sleeve 56, such as a ceramic material. However, in some embodiments a different material may be used. Generally, it is desirable to use materials with a matched coefficient of thermal expansion (CTE), which is provided in various embodiments. Ceramic materials typically possess very small CTE values which improve the reliability of the subassembly when exposed to varying temperatures. The optical subassembly 40 in various embodiments, thus, includes elements formed from a non-metal, which in some embodiments is a ceramic material. For example, the base 42, spacers 54, ferrule sleeve 56, and reinforcement members 60 are formed from the same material, such as a ceramic material to define a non-metal package. The various components may be directly assembled using an epoxy or adhesive.

In some embodiments, the package components may be off-the-shelf components. For example, the base 42, spacers 54 and reinforcement members 60 may be formed from 96% alumina wafers, such as available from Valley Design Corp. of Shirley, MA. The wafers may be, for example, 250 µm thick, 280 µm thick and 500 µm thick, respectively. Additionally, the ferrule sleeve 56 may be an LC ferrule split sleeve (SM-CS125S), available from Precision Fiber Products of Milpitas, CA.

The various components, including the packaging components may have different sizes and shapes. In one embodiment, the base 42 has a length of 3.25 mm, a width of 1.62 mm and a thickness of 0.25 mm; the spacers 54 have a length and width of 250 µm and a height or thickness of 280 µm; the reinforcement members 60 have a width of 0.5 mm, a length of 1.25 mm and a height of 1.5 mm; and the ferrule sleeve 56 has an inner diameter of 1.25 mm, an outer diameter of 1.6 mm, and a height of 2.5 mm. In one embodiment, the optical emitter 42 is formed from a semiconductor compound Gallium Arsenide (GaAs) and Aluminum Gallium Arsenide (AlGaAs) material having a length and width of 230 µm and a height of 215 µm. It should be appreciated that the materials and dimensions described above are merely exemplary of one embodiment, and different materials and dimensions may be provided.

Additionally, different epoxies or adhesives may be used to attach together the various components, such as mounting the various components to the base 42. For example, the ferrule sleeve 56 and reinforcement members 60 may be attached to the base 42 in one embodiment using an EPO-TEK 353ND epoxy, available from Epoxy Technology of Billerica, MA (or other high temperature epoxy), and the optical emitter 42 and spacers 54 attached to the base 42 using an AbleBond 84-1LMISR4 epoxy, available from Henkel Corp. of Rocky Hill, CT (or other electrically conductive die attach adhesive).

Thus, in various embodiments, the optical emitter 44 is attached to a small ceramic substrate, such as the base 42, having electrical contact pads and metal runners, such as the metal contacts 48 and metal traces 50. In some embodiments, a top contact of the optical emitter 44 is electrically connected using a shallow wire bond while the backside or underside connection is formed by conductive epoxy. In various embodiments, all of the components of the packaging of the optical subassembly 40 are attached using epoxy. In various embodiments, small ceramic spacers, such as the spacers 54, are slightly taller that the thicknesses of the laser die forming the optical emitter 44, are positioned around the optical emitter 44 and attached to the base 42.

Additionally, the ferrule sleeve 56 is attached to the base 42 surrounding the optical emitter 44 and spacers 54. It should be noted that the ferrule sleeve 56 in various embodiments may be any type of fiber optic alignment tube or mating sleeve. The alignment between the ferrule sleeve 56 and the aperture of the optical emitter 44, as well as the thickness of the spacers, determine the coupling efficiency as well as the signal-to-noise ratio of the optical link with the optical fiber inserted within the ferrule sleeve 56. Increased mechanical strength and/or support are provided by the reinforcement members 60 that are adjacent or attached to the side walls of the ferrule sleeve 56.

More particularly, as shown in Figure 3, an optical fiber 64 (e.g., a polyimide fiber) is inserted within the ferrule sleeve 56. In the illustrated embodiment, an APC ferrule stick 66 surrounds at least the portion of the optical fiber 64 that extends into and is received within the ferrule sleeve 56. The ferrule stick 66 may be formed from a similar material to the ferrule sleeve 56, for example, a ceramic material such as zirconia. In some embodiments, the ferrule stick 66 is an LC-type ferrule stick, such as an SM-FER1010C-1260 LC-type ferrule stick available from Precision Fiber Products. The ferrule stick 66 generally includes an opening therethrough for receiving and securing therein the optical fiber 64. The ferrule stick 66 is sized and shaped to fit within the ferrule sleeve 56, which may include a resistance fit or may provide a spacing for inserting an adhesive therein (e.g., having a slightly smaller diameter than the ferrule sleeve 56).

In the illustrated embodiments, the ferrule stick 66 is sized to extend beyond a top end 66 of the ferrule sleeve 56 when inserted therein to align the optical fiber 64 with the optical emitter 44 to provide an optical link or optical coupling therebetween. The distance the ferrule stick 66 extends beyond the top end 66 of the ferrule sleeve 56 may be varied and in some embodiments the ferrule stick 66 is generally level with the top end 66. In other embodiments, the ferrule stick 66 may not extend beyond the top end 66 when inserted within the ferrule sleeve 54.

In the illustrated embodiment, the mating end 70 of the ferrule stick 66 that is inserted within the ferrule sleeve 54 includes an angled polished edge 68, which is also referred to as an APC. The degree of angle to the angled polished edge 68 may be varied, for example, based on an amount or type of back reflection to be reduced. It should be noted that in some embodiments, the ferrule stick 66 includes a planar mating end.

As can be seen, when the ferrule stick 66 is inserted within the ferrule sleeve 56 a portion of the mating end 70 abuts and contacts at least one of the spacers 54, which prevents the mating end from contacting the optical emitter 44. It should be noted that the height of the spacers 54 may be provided such that the gap between the optical emitter 44 and the optical fiber 64 is within a defined or predetermined range to provide the optical link (e.g., taking into consideration the angle of the mating end 70). It also should be noted that if the mating end 70 of the ferrule stick 66 is planar, the mating end will abut and contact all of the spacers 54.

In various embodiments, a transparent coupling fluid (e.g. an index-matching gel) with a refractive index close to that of the fiber core of the optical fiber 64 is provided within the ferrule sleeve 56 and fills the gap 72 between the mating end 70 and the top surface 42 of the base 42 within the ferrule sleeve 56. The coupling fluid in various embodiments provides that a large portion of the optical modes are coupled into the optical fiber 64 while reducing back reflections. The coupling fluid also improves the coupling efficiency when single-mode optical emitters (e.g. single-mode lasers) or emitters with a large optical output beam divergence (e.g. LEDs) are used. Alternatively or optionally, an anti-reflection coating (ARC) may be deposited on the optical fiber facet.

Variations and modifications are contemplated, for example, a fiber stub 74 with APC and/or ARC may be provided as shown in Figure 4. As can be seen in this embodiment, the ferrule stick 66 is attached to the fiber stub 74 with the fiber stub 74 forming the mating end that abuts and contacts one or more of the spacers 54. It should be noted that in this embodiment, different pieces of optical fiber 64a, 64b are provided within the ferrule stick 66 and fiber stub 74. The fiber stub 74 is configured as an adapter with an angled cut lower surface and in various embodiments is formed from the same material as the ferrule stick 66.

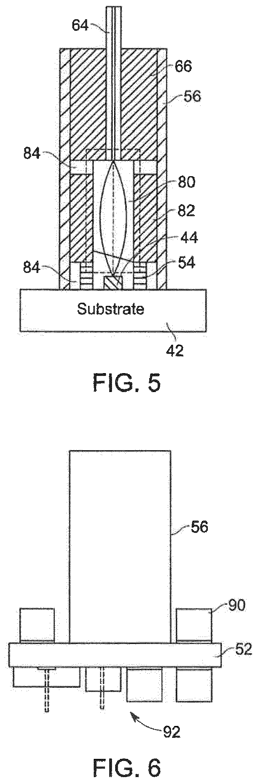

An example of another variation is the embodiment shown in Figure 5 that includes a lens 80, which is illustrated as a gradient-index (GRIN) lens, but may be other types of lenses, such as a ball lens. In this embodiment, two ferrule sticks 66, 82 are provided for securing therein the optical fiber 64 and the lens 80, respectively. It should be noted that the reinforcement members 60 are not shown for ease of illustration. Also, the lens 80 is illustrated as having a polished angled facet adjacent the optical emitter 44. However, in some embodiments, this end is planar. Additionally, an ARC optionally may be applied to this end of the lens 80. Also, air gaps 84 and venting slots (not shown) are provided, for example, to allow expansion of the adhesives used to attach the components within the ferrule sleeve 56 during the assembly process.

Thus, the ferrule stick 66 containing the optical fiber 64 and optionally the ferrule stick 82 containing the lens 80 (or the fiber stub 74) is inserted into the ferrule sleeve 56 until contact is made with the spacers 54. The spacers 54 prevent the ferrule stick 66 or 82 from contacting, and for example, damaging the optical emitter 44 (or wire bond), while positioning the tip of the optical fiber 64 or lens 80 in close proximity to the top surface of the optical emitter 44. Once inserted, the ferrule stick 66 and optionally the ferrule stick 82, and/or the fiber stub 74 are permanently bonded to the ferrule sleeve 54, such as using epoxy. As described herein, in order to direct back reflections away from the emitter surface an angled polished cut can be used for the lens 80, fiber stub 74, or ferrule stick facet.

In various embodiments, the optical subassembly 40 allows for the connection of a light emitter, for example, the optical emitter 42 to an optical waveguide, such as the optical fiber 64 (which may be embodied as the optical fibers 36 shown in Figure 1). In one embodiment, the dimensions of the optical subassembly are 1.6mm × 3.2mm × 3.85mm, which allows the miniaturized optical subassembly 40 to fit in very small optoelectronic assemblies (e.g. a video inspection instrument distal head, such as the distal head 30 shown in Figure 1). By using the reinforcement members 60 around the ferrule sleeve 54, a small form factor may be used without custom carriers. Also, while the ferrule sleeve 56 positions the optical fiber 64 in the lateral dimension, the spacers 54 protect the emitter die and wire bond of the optical emitter 44 by providing a mechanical stop in the z-direction. Thus, using spacers 54 facilitates the assembly process between the optical emitter 44 and the optical fiber 64 without using custom ferrules or carrier substrates with integrated mechanical stops. The spacers 54 also prevent or reduce the likelihood of damage to the optical emitter die in harsh environment operation where mechanical stress from large temperature variations can cause the components to expand. The APC and ARC of the lens 80, fiber stub 74, and/or ferrule stick 66 may also improve signal-to-noise ratio of the optical link. However, when no ARC is used, index matching materials such as coupling fluids may be provided between the optical emitter 44 and adjacent optical element (e.g. ferrule stick 66, fiber stub 74, or lens 80). It should be noted that selecting between using coupling fluid or ARC may depend on the specific application and the temperature variations to which the optical subassembly 40 will be exposed.

Other variations and modifications are contemplated. For example, as shown in Figure 6, the reinforcement members 60 may be replaced with different elements, illustrated as capacitors 90 that are part of a driver circuit used to control the optical emitter 44. Figure 6 shows air gaps between the capacitors 90 and the ferrule sleeve 56, but physical contact is made between these elements and mechanical support can be provided when adhesives are used to connect the capacitors 90 and the ferrule sleeve 56 ( the capacitors 90 abut and physically contact the ferrule sleeve 56).

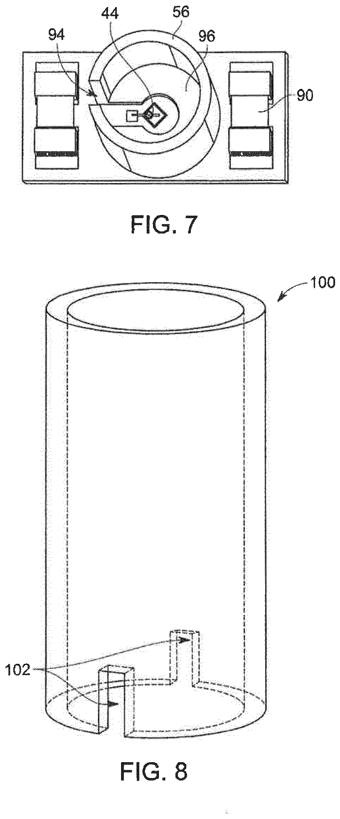

It should be appreciated that other electrical components, such as that are used to drive the optical emitter 44 may be used as reinforcement members. Also, as can be seen, additional driver components 92 (e.g., discrete electrical components) may be attached to the top side 46 and/or bottom side 52 (or back side) of the base 42. In another example not according to the invention and as shown in Figure 7, a slot 94 along the length of the ferrule sleeve 55 may extend to a base 96 of the ferrule sleeve 56. The portion of the slot 94 at the base 96 is sized and shaped to surround the optical emitter 44.

Additionally, the thickness of the base 96 is similar to that of the spacers 54, which are removed in this example. Thus, the base 96 operates as the spacers in this embodiment.

In another example, a ferrule sleeve 100 may be provided as shown in Figure 8, which is a solid sleeve that does not include a longitudinal slit, such as the slit 58. However, in this embodiment, venting notches 102 are provided at a lower end of the ferrule sleeve 100 at or near where the ferrule sleeve 100 attaches to the base 42 (not shown in Figure 8). The venting notches 102 may be added, for example, using a dicing saw. The venting notches 102 may allow, for example, index-matching fluid or other substances to flow out of the ferrule sleeve 100 when the ferrule stick 66 is inserted therein.

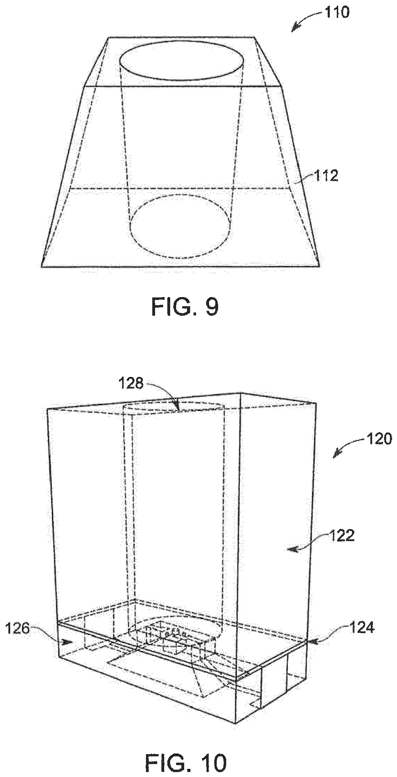

As another variation not according to the invention and as shown in Figure 9, a ferrule sleeve 110 may be provided with angled walls 112. For example, the angled walls 112 form the ferrule sleeve having an outer surface with a trapezoidal shape. Venting notches may be added (not shown) to allow for index-matching fluid or other substance to flow out when the ferrule stick is inserted.

Other variations include, for example, adding corrugations on the bottom side 52 of the base 42 to aid (passively) in heat dissipation. Similarly, corrugations may be added to the side 62 of the reinforcement members 60 that contact the ferrule sleeve 56 or to the outer surface of the ferrule sleeve 56. In various embodiments, the base 42 is thermally conductive and the material between the optical emitter 44 and base 42 is thermally and electrically conductive. The corrugations may be provide to help with heat dissipation from the optical emitter 44 and can improve performance in high temperature environments.

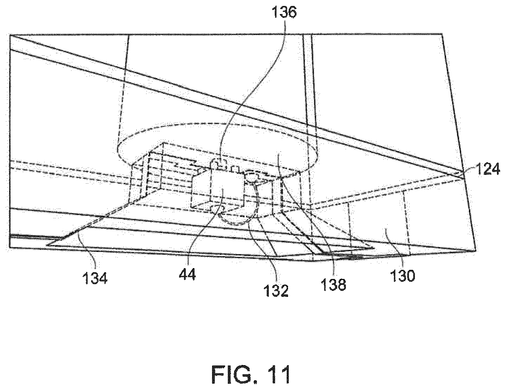

Different mounting or connection arrangements not according to the invention are illustrated in figures 10 and 11. For example, as shown in Figures 10 and 11 a three-layer flip chip configuration 120 may be provided. A ferrule sleeve 122 is mounted to a spacer layer 124, which is mounted to a stand 126. It should be noted that the ferrule sleeve 122, spacer layer 124 and stand 126 are formed from the same material and may be fabricated as a single unitary piece.

The ferrule sleeve 122 includes an opening 128 for receiving, for example, an optical fiber. Additionally, the stand 126 includes legs 130 to allow clearance for wire bonds 130 to connect to the optical emitter 44. Additionally, arms 134 support the optical emitter 44 below an opening 136 in the spacer layer 124 that allows, for example, for a fixed distance between the optical emitter 44 and the optical fiber in the ferrule sleeve 122 and can be filled by using an optical adhesive (e.g., index-matching gels), which reduces reflections. As can also be seen, the spacer layer 124 is supported by a solid portion 138 of the stand 126.

Thus, various embodiments provide an optical subassembly in a small form factor that can operate in different environments.

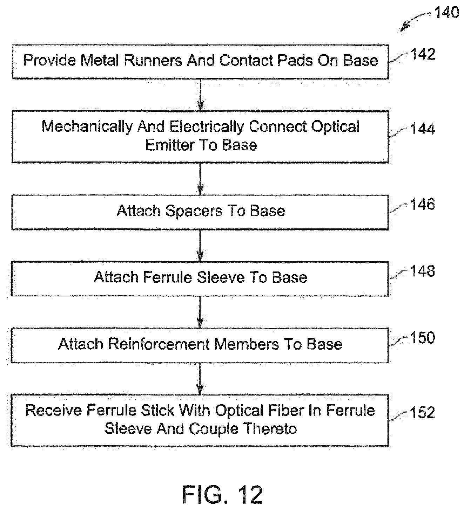

Various embodiments also provide a method 140 as shown in Figure 12 for assembling an optical subassembly. The various steps may be performed in a different order than described. The method 140 includes metalizing the base (or substrates) with runners and/ or contact pads at 142 (such as by depositing metal runners and contact pads on the base), mechanically and electrically connecting one or more light emitters to the base at 144, attaching spacers to a base at 146 around the optical emitter previously attached to a top surface of the substrate, which may include providing electrical connections as described herein. A ferrule sleeve is attached to the base at 148, which surrounds the spacers and optical emitter as described herein. Reinforcement member blocks are attached to the substrate at 150, such as adjacent the ferrule sleeve as described herein. The attaching in steps 142, 144, 146, 148, and 150 may be performed sequentially or concurrently. A ferrule stick with an optical fiber is then received in the ferrule sleeve and attached therein at 152 as described in more detail herein. It should be noted that in various embodiments, an active alignment of the components is not used. However, in other embodiments, active alignment is provided.

It is to be understood that the above description is intended to be illustrative, and not restrictive. While the dimensions and types of materials described herein are intended to define the parameters of the various embodiments, the embodiments are by no means limiting and are exemplary embodiments. The scope of the various embodiments should, therefore, be determined with reference to the appended claims. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects.

## Claims

1. An optical subassembly (32; 40), comprising:
a base (42);
an optical emitter (44) attached to the base (42);
a plurality of spacers (54) attached to the base (42) surrounding at least a portion of the optical emitter (44);
a ferrule sleeve (56) attached to the base (42) with the optical emitter (44) and
the spacers (54) within the ferrule sleeve, the ferrule sleeve (56) configured to receive an optical fiber (36; 64) therein; and
reinforcement members (60) attached to the base (42) adjacent the ferrule sleeve (56) and configured to provide support to the ferrule sleeve (56), the optical sub-assembly being **characterised in that** the reinforcement members (60) comprise blocks in abutting engagement with at least a portion of an outer surface of the ferrule sleeve (56).

2. The optical subassembly of claim 1, wherein the base (42), the spacers (54), the ferrule sleeve (56) and the reinforcement members (60) are formed from a same material, wherein, preferably, the material is a ceramic material.

3. The optical subassembly of claim 1 or claim 2, wherein a side of the blocks in abutting engagement with the outer surface of the ferrule sleeve (56) has a curved surface complementary to the outer surface of the ferrule sleeve (56).

4. The optical subassembly of any preceding claim, wherein the reinforcement members (60) comprise components to drive the optical emitter (44), wherein, preferably, the components are capacitors (90).

5. The optical subassembly of any preceding claim, further comprising an epoxy for attaching the spacers (54), the ferrule sleeve (56) and the reinforcement members (60) to the base (42).

6. The optical subassembly of any preceding claim, further comprising a spacer mounted to the base (42), wherein the base comprises support legs and the optical emitter (44) is attached under the spacer.

7. The optical subassembly of any preceding claim, wherein the spacers (54) having a height which is greater than the height of the optical emitter (44).

8. A video inspection instrument (20) comprising:
a controller at a proximal end; and
a distal head (36) at a distal end, wherein the distal head (36) comprises the optical subassembly (32) of any preceding claim optically connected to the controller via an optical fiber.

## Patentansprüche

1. eine optische Teilbaugruppe (32, 40), umfassend:
eine Basis (42);
einen optischen Emitter (44), der an der Basis (42) angebracht ist;
eine Vielzahl von Abstandshaltern (54), die an der Basis (42) angebracht sind, die mindestens einen Abschnitt des optischen Emitters (44) umgeben;
eine Ferrulenhülse (56), die an der Basis (42) angebracht ist, wobei der optische Emitter (44) und die Abstandshalter (54) innerhalb der Ferrulenhülse sind, wobei die Ferrulenhülse (56) konfiguriert ist, um eine optische Faser (36; 64) darin aufzunehmen; und
Verstärkungselemente (60), die an der Basis (42) angrenzend an die Ferrulenhülse (56) angebracht sind und konfiguriert sind, um Unterstützung für die Ferrulenhülse (56) bereitzustellen, wobei die optische Teilbaugruppe **dadurch gekennzeichnet, dass** die Verstärkungselemente (60) Blöcke in anstoßendem Eingriff mit mindestens einem Abschnitt einer Außenoberfläche der Ferrulenhülse (56) umfassen.

2. Optische Teilbaugruppe nach Anspruch 1, wobei die Basis (42), die Abstandshalter (54), die Ferrulenhülse (56) und die Verstärkungselemente (60) aus einem gleichen Material ausgebildet sind, wobei, vorzugsweise, das Material ein Keramikmaterial ist.

3. Optische Teilbaugruppe nach Anspruch 1 oder 2, wobei eine Seite der Blöcke in anstoßendem Eingriff mit der Außenoberfläche der Ferrulenhülse (56) eine gekrümmte Oberfläche aufweist, die zu der Außenoberfläche der Ferrulenhülse (56) komplementär ist.

4. Optische Teilbaugruppe nach einem der vorstehenden Ansprüche, wobei die Verstärkungselemente (60) Komponenten umfassen, um den optischen Emitter (44) anzutreiben, wobei, vorzugsweise, die Komponenten Kondensatoren (90) sind.

5. Optische Teilbaugruppe nach einem der vorstehenden Ansprüche, ferner umfassend ein Epoxid zum Anbringen der Abstandshalter (54), der Ferrulenhülse (56) und der Verstärkungselemente (60) an der Basis (42).

6. Optische Teilbaugruppe nach einem der vorstehenden Ansprüche, ferner umfassend einen Abstandshalter, der an der Basis (42) montiert ist, wobei die Basis Stützschenkel umfasst und der optische Emitter (44) unter dem Abstandshalter angebracht ist.

7. Optische Teilbaugruppe nach einem der vorstehenden Ansprüche, wobei die Abstandshalter (54) eine Höhe aufweisen, die größer als die Höhe des optischen Emitters (44) ist.

8. Videoinspektionsinstrument (20), umfassend:
eine Steuereinrichtung an einem proximalen Ende; und
einen distalen Kopf (36) an einem distalen Ende, wobei der distale Kopf (36) die optische Teilbaugruppe (32) nach einem der vorstehenden Ansprüche umfasst, die mit der Steuereinrichtung über eine optische Faser optisch verbunden ist.

## Revendications

1. Sous-ensemble optique (32 ; 40), comprenant :
une base (42) ;
un émetteur optique (44) fixé à la base (42) ;
une pluralité d'entretoises (54) fixées à la base (42) entourant au moins une partie de l'émetteur optique (44) ;
un manchon de ferrule (56) fixé à la base (42) avec l'émetteur optique (44) et les entretoises (54) à l'intérieur du manchon de ferrule, le manchon de ferrule (56) étant conçu pour recevoir une fibre optique (36 ; 64) en son sein ; et
des éléments de renfort (60) fixés à la base (42) adjacents au manchon de ferrule (56) et conçus pour fournir un support au manchon de ferrule (56), le sous-ensemble optique étant **caractérisé en ce que** les éléments de renfort (60) comprennent des blocs en prise en butée avec au moins une partie d'une surface externe du manchon de ferrule (56).

2. Sous-ensemble optique selon la revendication 1, dans lequel la base (42), les entretoises (54), le manchon de ferrule (56) et les éléments de renfort (60) sont formés à partir d'un même matériau, dans lequel, de préférence, le matériau est un matériau céramique.

3. Sous-ensemble optique selon la revendication 1 ou la revendication 2, dans lequel un côté des blocs en prise en butée avec la surface externe du manchon de ferrule (56) a une surface incurvée complémentaire à la surface externe du manchon de ferrule (56).

4. Sous-ensemble optique selon l'une quelconque des revendications précédentes, dans lequel les éléments de renfort (60) comprennent des composants pour entraîner l'émetteur optique (44), dans lequel, de préférence, les composants sont des condensateurs (90).

5. Sous-ensemble optique selon l'une quelconque revendication précédente, comprenant en outre un époxy permettant de fixer les entretoises (54), le manchon de ferrule (56) et les éléments de renfort (60) à la base (42).

6. Sous-ensemble optique selon l'une quelconque revendication précédente, comprenant en outre une entretoise montée sur la base (42), dans lequel la base comprend des pattes de support et l'émetteur optique (44) est fixé en dessous de l'entretoise.

7. Sous-ensemble optique selon l'une quelconque revendication précédente, dans lequel les entretoises (54) ayant une hauteur qui est supérieure à la hauteur de l'émetteur optique (44).

8. Instrument d'inspection vidéo (20) comprenant :
un dispositif de commande au niveau d'une extrémité proximale ; et
une tête distale (36) au niveau d'une extrémité distale, dans lequel la tête distale (36) comprend le sous-ensemble optique (32) selon l'une quelconque revendication précédente connecté optiquement au dispositif de commande par l'intermédiaire d'une fibre optique.
